**Europäisches Patentamt**

**European Patent Office**

**Office européen des brevets**

(19)

(11) Veröffentlichungsnummer: **0 302 996**
**A2**

## (12) EUROPÄISCHE PATENTANMELDUNG

(21) Anmeldenummer: **88105912.5**

(22) Anmeldetag: **14.04.88**

(51) Int. Cl.⁴ **B29C 65/18** , //B29L7:00

(30) Priorität: **11.08.87 DE 3726640**

(43) Veröffentlichungstag der Anmeldung:
**15.02.89 Patentblatt 89/07**

(84) Benannte Vertragsstaaten:
**CH DE FR GB IT LI NL SE**

(71) Anmelder: **Paper Converting Machine GmbH**
**Mühlweg 4**
**D-6707 Schifferstadt(DE)**

(72) Erfinder: **Meyer, Dieter, Dipl.-Ing.**
**Dürer Strasse 41**
**D-6700 Ludwigshafen(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**D-7500 Karlsruhe 1(DE)**

(54) **Vorrichtung zurm Längsnahtschweissen von Kunststoffolien.**

(57) Es wird eine Vorrichtung zum Längsnahtschweißen von Kunststoffolien angegeben, wobei die sich überdeckenden, miteinander zu verschweißenden Folienränder in Längsrichtung zwischen einem beheiztem Schweißrad und Gegendruckmitteln hindurchgezogen und mit diesen in gegebenenfalls antreibenden Kontakt gebracht werden. Dabei ist die Ausbildung der Vorrichtung so getroffen, daß die Gegendruckmittel zwei zum Schweißrad achsparallel gelagerte und in Längsrichtung hintereinander angeordnete, gegebenenfalls in ihrem gegenseitigen Abstand verstellbare Druckrollen sind.

Fig. 1

EP 0 302 996 A2

## Vorrichtung zum Längsnahtschweißen von Kunststoffolien

Die Erfindung betrifft eine Vorrichtung zum Längsnahtschweißen von Kunststoffolien, wobei die sich überdeckenden, miteinander zu verschweißenden Folienränder in Längsrichtung zwischen einem beheizten Schweißrad und Gegendruckmitteln hindurchgezogen und mit diesen in gegebenenfalls antreibenden Kontakt gebracht werden.

Derartige Vorrichtungen finden insbesondere, worauf die Erfindung jedoch nicht beschränkt sein soll, bei Verpackungsmaschinen Anwendung, wo die zu verpackende Ware in geeigneter Weise auf Format gebracht und dann zusammen mit der dabei der Umhüllung bildenden Kunststoffolie vorgeschoben wird. Bei dieser Vorschubbewegung werden an der umhüllenden Kunststoffolie ein oder mehrere Längsnähte angebracht, je nach dem, ob die Umhüllung aus ei ner oder mehreren Folienbahnen zusammengesetzt ist. Schließlich wird das so eingehüllte Verpackungsgut durch Quersiegelung des umhüllenden Folienschlauches in einzelne Gebinde aufgeteilt.

Beim dargestellten Beispiel kann das Verpackungsgut durch einen Kanal, beispielsweise aus Blech auf Format gebracht werden, durch das es hindurchgeschoben wird, wobei gleichzeitig auf die Außenseite des Kanals das Folienmaterial zugeführt und längsgeschweißt wird. Hinter dem Ende des Kanals befindet sich dann die erwähnte Quersiegelstation.

Bei der genannten Längsnahtschweißung werden die sich überdeckenden Folienkanten zwischen einem Schweißrad und Gegendruckmitteln hindurchgezogen, die aus einer Druckrolle bestehen kann, wobei Schweißrad und Druckrolle durch eine gegebenenfalls einstellbare Kraft in vorherbestimmbarer Weise gegeneinander gedrückt sind. Auf diese Weise besteht bezüglich der dazwischen hindurchgeführten Folienränder eine Linienberührung mit dem Schweißrad einerseits und der Druckrolle andererseits. Diese Linienberührung führt dazu, daß die miteinander zu verschweißenden Folienränder nur sehr kurzzeitig mit dem Schweißrad in Berührung kommen und entsprechend nur ebenso kurzzeitig der die Verschweißung herbeiführenden Temperatur ausgesetzt sein können, was dazu führt, daß eine hohe Schweißtemperatur und/oder eine niedrige Vorschubgeschwindigkeit und/oder ein großer Anpreßdruck zwischen Schweißrad und Druckrolle ge wählt werden müssen, denn von diesen drei Parametern hängen Güte und Haltbarkeit der Schweißverbindung jeweils bezogen auf ein bestimmtes Folienmaterial ab. Selbstverständlich kann auch das Folienmaterial noch als Bestimmungsgröße variiert werden, was jedoch entweder kostspielig ist oder zu einer wenig widerstandsfähigen Verpackung führt.

Innerhalb der genannten Parameter ist aber der Bewegungsspielraum äußerst begrenzt, da bei der Herstellung der Schweißnaht sowohl eine Überhitzung als auch eine zu geringe Aufheizung schnell zu unbrauchbaren Ergebnissen führt. Entsprechend muß die die Parameter variierende, meist selbsttätig arbeitende Regelung feinfühlig und aufwendig ausgelegt sein, was die Empfindlichkeit und Störanfälligkeit steigert sowie zu einer schlechten Bedienbarkeit durch ungeschultes Personal führt.

Auf jeden Fall läßt sich aber auch bei Ausnutzung aller Möglichkeiten die Vorschubgeschwindigkeit des Folienmaterials im Bereich der Schweißnahtherstellung nur in Grenzen steigern, was sich auf die Arbeitsgeschwindigkeit der gesamten Verpackungsmaschine auswirkt und somit zu einem erheblichen Kostenfaktor wird.

Aufgabe der Erfindung ist es daher, die Vorrichtung der eingangs genannten Art mit einfachen Mitteln derart auszubilden, daß sich bei gesteigerter Güte und Zuverlässigkeit der hergestellten Schweißnaht der Bewegungsbereich innerhalb der genannten Parameter erheblich vergrößert, so daß insbesondere eine wesentlich erhöh te Vorschubgeschwindigkeit des Folienmaterials innerhalb des Bereichs der Schweißnahtherstellung erreicht werden kann.

Diese Aufgabe ist erfindungsgemäß dadurch gelöst, daß die Gegendruckmittel zwei zum Schweißrad achsparallel drehbar gelagerte und in Längsrichtung hintereinander angeordnete Druckrollen sind.

Durch diese erfindungsgemäße Maßnahme ist erreicht, daß das Schweißrad mit seinem zwischen den beiden Druckrollen gelegenen Umfangsbereich zwischen die Druckrollen in Richtung auf das Folienmaterial eintaucht, so daß die miteinander zu verschweißenden Folienränder sich über diesen gesamten Bereich bzw. Bogen des Schweißrades an diesem in Anlage befinden und folglich über einen wesentlich längeren Zeitraum mit dem Schweißrad in Berührung sind. Dies gibt im wesentlichen die Möglichkeit, das Folienmaterial mit einer wesentlich höheren Vorschubgeschwindigkeit durch die Schweißvorrichtung laufen zu lassen, ohne daß dadurch die Länge der schweißenden Beeinflussung herabgesetzt wird. Im Rahmen der erlangten größeren Bewegungsfreiheit kann gleichzeitig die gegenseitig Anpreßkraft von Schweißrad und Druckrollen herabgesetzt und/oder die Schweißtemperatur gemindert werden. Insgesamt wird damit die Durchführung des Schweißvorganges weniger sensibel, so daß auch die entsprechenden Regeleinrichtungen weniger feinfühliger und damit billiger ausgestaltet werden können.

Die Einführung eines weiteren Parameters ergibt sich außerdem dadurch, daß der Abstand der Druckrollen in Längsrichtung variiert werden kann, was entsprechend die einstellbare Bestimmung der Größe des Bogens des Schweißrades ermöglicht, der mit dem Folienmaterial in schweißende Berührung tritt.

Zweckmäßig ist es hierbei, daß die Druckrollen in Längsrichtung gesehen mit gleichem Abstand vor und hinter der Achse des Schweißrades angeordnet sind, wobei es sich als vorteilhaft erwiesen hat, daß der zwischen den Druckrollen gelegene Bogen des Schweißrades einen Winkel von etwa 15 bis 20° einschließt.

Wie dies auch für das Schweißrad gelten kann, können die Druckrollen durch die Folienränder angetrieben sein, also durch Friktion mitgenommen werden. Je nach den Umständen des Einzelfalles kann das Schweißrad jedoch auch angetrieben sein, um damit den Vorschub der Folien zu beeinflussen. Zur guten Gegenlagerung für das Schweißrad können die Druckrollen dabei als gummibezogene Walzen ausgebildet sein.

Was das Schweißrad betrifft, so kann dieses in Axialrichtung nebeneinander liegend zweiradial vorstehende Schweißkanten aufweisen, durch die sich im Hinblick auf die Haltbarkeit zwei nebeneinander liegende Schweißnähte ausbilden, wobei es vorteilhaft ist, daß die Schweißkanten im Abstand zueinander angeordnet sind.

In verbesserter Ausführung dieses Gedankens kann es jedoch zweckmäßig sein, daß die Schweißkanten gleichmäßig über den Umfang des Schweißrades verteilt regelmäßige Unterbrechungen aufweisen, wobei vorteilhafterweise die Unterbrechungen und Schweißkantenabschnitte in Umfangsrichtung im wesentlichen gleiche Länge haben und die Schweißkantenabschnitte und Unterbrechungen der benachbarten Schweißkanten um eine halbe Teilung gegeneinander versetzt sind. Dadurch ergibt sich ein waffelartiges Muster der Schweißnaht mit dem Vorzug, daß beim Aufgehen eines der so gebildeten Schweißnahtabschnitte nicht die Gefahr eines durchlaufenden Aufplatzens der Schweißnaht besteht, vielmehr der jeweilige Defekt am gerade betroffenen Schweißnahtabschnitt seine endgültige Ausdehnung findet.

Weitere Merkmale und Einzelheiten der Erfindung ergeben sich aus der nachfolgenden Beschreibung von Ausführungsformen, die auf der Zeichnung dargestellt sind. In der Zeichnung zeigen:

Fig. 1 eine schematische Perspektivansicht einer Vorrichtung zur Längsnahtschweißung von Kunststoffolien;

Fig. 2 eine Draufsicht auf die Schweißvorrichtung gemäß Fig. 1 im Bereich des Schweißrades und

Fig. 3 eine Teilansicht einer konstruktiv ausgebildeten Schweißvorrichtung in Längsrichtung gesehen.

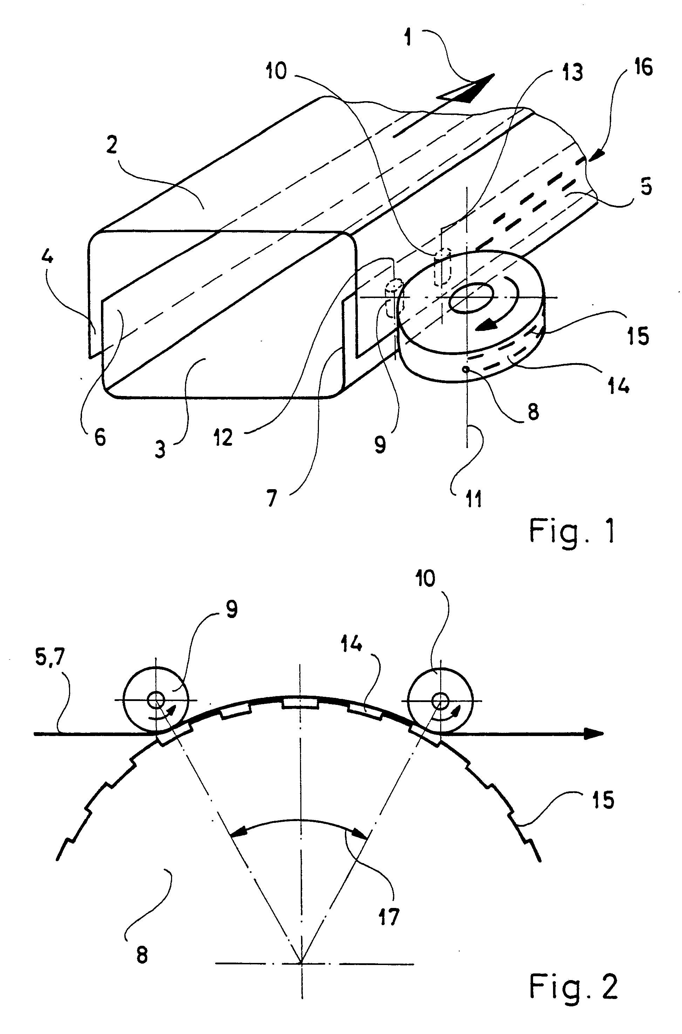

Fig. 1 zeigt zwei in Richtung des Pfeiles 1 gleichmäßig bewegte Folienbahnen 2 und 3, die sich mit ihren Rändern 4, 6 bzw. 5, 7 in Längsrichtung überdecken, einen wesentlichen rechteckigen Kanal oder Schlauch bilden.

Aus Gründen der Übersichtlichkeit nicht dargestellt ist hier ein innerhalb der beiden Kunststoffolien angeodneter, formatbildender Rechteckkanal aus Blech, durch den praktisch mit einer der Vorschubgeschwindigkeit der Folien entsprechenden Geschwindigkeit das zu verpackende Gut geschoben wird, ohne dabei mit den Folienbahnen 2 und 3 in Berührung zu kommen.

Jedem Bereich sich überdeckender Folienränder 4, 6 bzw. 5, 6 ist eine Vorrichtung zur Längsnahtschweißung zugeordnet, von denen hier nur die vordere dargestellt ist. Sie besteht im wesentlichen aus einem gegen die Folienränder 5, 7 drückenden Schweißrad 8 und zwei von innerhalb des Folienrandes 7 ebenfalls gegen die Folienränder und das Schweißrad 8 drückenden Rollen 9 und 10. Das Schweißrad 8 ist um eine parallel zu den Folienbändern 5, 7 und senkrecht zur Vorschubrichtung 1 angeordnete Achse 11 drehbar. Die Drehachsen 12 und 13 der Druckrollen 9 und 10 sind zur Achse 11 parallel.

Nicht näher dargestellt ist hier die Tatsache, daß die Druckrollen 9 und 10 am erwähnten, formatbildenden Blechkanal gelagert sind, während die Lagerung des Schweißrades 8 in geeigneter Weise am Gestell der Verpackungsmachine erfolgt.

Fig. 2 zeigt die Schweißvorrichtung gemäß Fig. 1 etwa in einer kurz oberhalb des Schweißrades 8 parallel zu diesem gelegenen Schnittebene. Hier ist ersichtlich, wie die Folienränder 5, 7 zwischen den Druckrollen 9 und 10 im Bogen um das Schweißrad 8 geführt und über die gesamte Bogenlänge mit dem Schweißrad in Berührung sind, also bezüglich der Herstellung der Schweißnaht eine beträchtliche Verweilzeit in Anlage an das Schweißrad 8 verbringen.

Wie aus den Figuren 1 und 2 gemeinsam ersichtlich, weist das Schweißrad in Axialrichtung voneinander beabstandet zwei Schweißkanten auf, die mit regelmäßigen Unterbrechungen 14 versehen sind, so daß sich im Ergebnis Schweißkantenabschnitte 15 ausbilden, die entsprechend zu einer waffelförmigen Schweißnaht der in Figur 1 bei 16 veranschaulichten Art führen, wenn außerdem Schweißkantenabschnitte und Unterbrechungen der benachbarten Schweißkanten um eine halbe Teilung in Umfangsrichtung gegeneinander versetzt sind.

Durch den gegenseitigen Abstand der Druckrollen 9 und 10 wird die Größe eines Zentriwinkels 17 bestimmt, über den sich die Folienränder 5, 7 in Anlage am Schweißrad 8 befinden. Die Größe des Zentriwinkels 17 liegt zweckmäßigerweise im Bereich von 15 bis 20°. Sie kann auch außerhalb dieses Bereiches variiert werden, in dem die Druckrollen 9, 10 hinsichtlich ihres gegenseitigen Abstandes einstellbar sind.

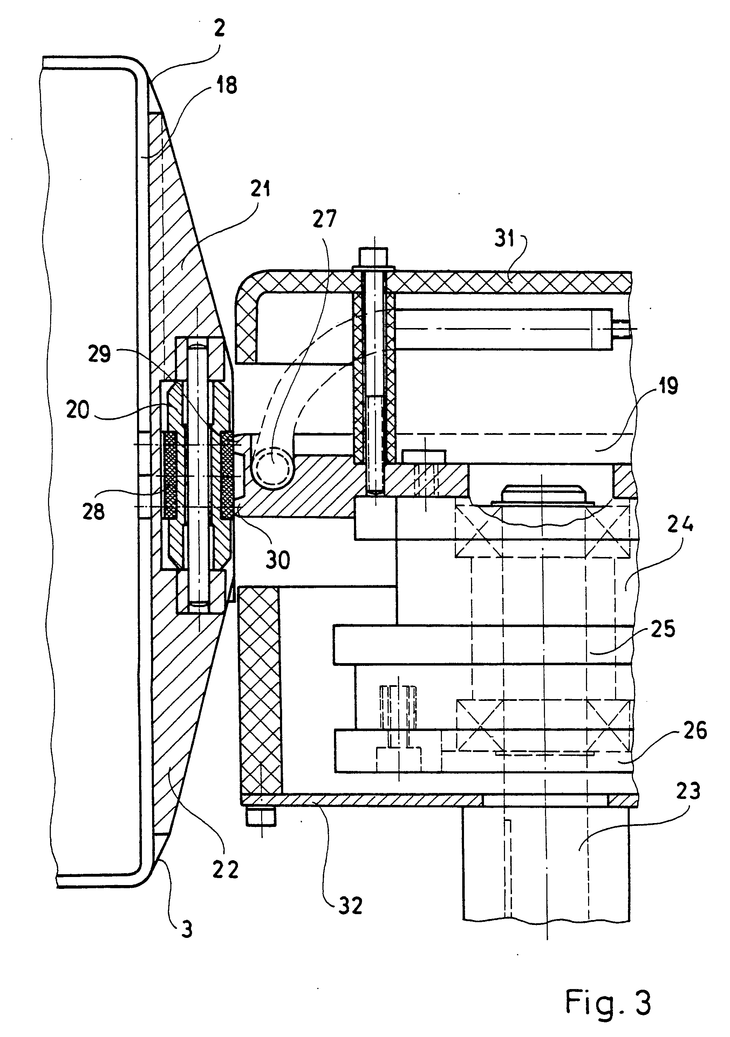

Fig. 3 zeigt ausschnittweise eine konstruktive Durchbildung der Schweißvorrichtung etwa in einem Vertikalschnitt entlang einer die Achsen 11 und 12 enthaltenden Ebene gemäß Fig. 1.

Dabei ist zunächst der bereits erwähnte, formatbildende Blechkanal 18 ersichtlich, über den die Folienbahnen 2 und 3 gezogen werden, wobei sie mit ihren sich überdeckenden Rändern zwischen das Schweißrad 19 und die Druckrolle 20 gelangen.

Die Druckrolle 20 ist über Stege 21 und 22 am Blechkanal 18 gelagert, während das Schweißrad 19 in nicht näher dargestellter Weise durch entsprechende Befestigung seiner Welle 23 am Gestell der Verpackungsmaschine gelagert ist.

Ein mit dem Schweißrad 19 verbundener Flansch 24 trägt Schleifringe 25 und 26 für elektrische Schleifkontakte, über die die Energie zur Aufheizung des Schweißrades 19 zugeführt wird. Ein Temperaturfühler dient der Steuerung und Kontrolle der Temperatur des Schweißrades, das durch eine Heizpatrone 27 erhitzt wird.

Wie Fig. 3 im einzelnen zeigt, ist die Druckrolle 20 mit einem Gummibezug 28 versehen, gegen den - unter Zwischenlage der Folienränder - das Schweißrad 19 mit zwei in Axialrichtung beabstandeten Schweißkanten 29 und 30 drückt. Die Schweißkanten können wieder in der anhand der Figuren 1 und 2 näher erläuterten Weise ausgebildet sein.

Eine das Schweißrad 19 umgebende Ummantelung 31, 32 dient als Schutz gegen Berührung.

Was die einstellbare Bestimmung und Regelung der für die Schweißnahtherstellung maßgeblichen Faktoren Schweißtemperatur, Vorschubgeschwindigkeit der Folienbahn, Druckkraft zwischen Schweißrad 19 und Druckrollen 9, 10 bzw. 28 betrifft, so wurden die dazu erforderlichen Einrichtungen mehrfach erwähnt, sind jedoch weiter nicht zeichnerisch dargestellt, da sie bekannt sind.

Bei dem insbesondere anhand Fig. 1 ersichtlichen Beispiel wird der die Verpackung ergebende Folienschlauch aus zwei Bahnen 2, 3 gebildet. Hier besteht selbstverständlich auch die Möglichkeit, nur eine um die gesamte dargestellte Rechteckkontur geschlagene Folienbahn oder aber auch mehr als zwei Folienbahnen zu verwenden. Entsprechend muß natürlich die Zahl der Schweißvorrichtungen gewählt werden.

## Ansprüche

1. Vorrichtung zum Längsnahtschweißen von Kunststofffolien, wobei die sich überdeckenden, miteinander zu verschweißenden Folienränder in Längsrichtung zwischen einem beheizten Schweißrad und Gegendruckmitteln hindurchgezogen und mit diesen in gegebenenfalls antreibenden Kontakt gebracht werden,
dadurch gekennzeichnet,
daß die Gegendruckmittel zwei zum Schweißrad (8, 19) achsparallel drehbar gelagerte und in Längsrichtung (1) hintereinander angeordnete Druckrollen (9, 10, 20) sind.

2. Vorrichtung nach Anspruch 1, dadurch gekennzeichnet, daß der gegenseitige Abstand der Druckrollen (9, 10, 20) in Längsrichtung (1) verstellbar ist.

3. Vorrichtung nach Anspruch 1 oder 2 dadurch gekennzeichnet, daß die Druckrollen (9, 10, 20) in Längsrichtung(1) gesehen mit gleichem Abstand vor und hinter der Achse (11, 23) des Schweißrades (8, 19) ange ordnet sind.

4. Vorrichtung nach Anspruch 1, 2 oder 3, dadurch gekennzeichnet, daß der zwischen den Druckrollen (8, 9, 20) gelegene Bogen des Schweißrades (8, 19) einen Winkel (17) von etwa 15 bis 20° einschließt.

5. Vorrichtung nach einem der Ansprüche 1 bis 4, dadurch gekennzeichnet, daß die Druckrollen (8, 9, 20) durch die Folienränder (4, 6) bzw. (5, 7) angetrieben sind.

6. Vorrichtung nach einem der Ansprüche 1 bis 5, dadurch gekennzeichnet, daß die Druckrollen (9, 10, 20) als gummibezogene Walzen ausgebildet sind.

7. Vorrichtung nach Anspruch 1, dadurch gekennzeichnet, daß das Schweißrad (8, 19) in Axialrichtung nebeneinander liegend zwei radial vorstehende Schweißkanten (29, 30) aufweist.

8. Vorrichtung nach Anspruch 7, dadurch gekennzeichnet, daß die Schweißkanten (29, 30) im Abstand zueinander angeordnet sind.

9. Vorrichtung nach Anspruch 7 oder 8, dadurch gekennzeichnet, daß die Schweißkanten (29, 30) gleichmäßig über den Umfang des Schweißrades (8, 19) verteilt regelmäßige Unterbrechungen (14) aufweisen.

10. Vorrichtung nach Anspruch 9, dadurch gekennzeichnet, daß Unterbrechungen (14) und Schweißkantenabschnitte (15) in Umfangsrichtung im westentlichen gleiche Länge aufweisen.

11. Vorrichtung nach Anspruch 9 oder 10, dadurch gekennzeichnet, daß die Schweißkantenabschnitte (15) und Unterbrechungen (14) der benachbarten Schweißkanten (29, 30) um eine halbe Teilung gegeneinander versetzt sind.

Fig. 1

Fig. 2

Fig. 3